# EUROPEAN PATENT APPLICATION

(11) **EP 4 435 639 A1**
(43) Date of publication of application: **25.09.2024**
(21) Application number: 21964746.8
(22) Date of filing: 18.11.2021
(51) Int. Cl.: G06F 21/16

(54) **DETERMINATION SYSTEM, INFORMATION PROCESSING DEVICE, METHOD, AND PROGRAM**

(71) Applicant: Evixar Inc., Tokyo 104-0033 (JP)
(72) Inventor: SUZUKI, Hisaharu, Tokyo 104-0033 (JP); NAGATOMO, Yasuhiko, Tokyo 104-0033 (JP); TAKIGAWA, Atsushi, Tokyo 104-0033 (JP)
(74) Representative: D Young & Co LLP
(86) International application number: PCT/JP2021/042416
(87) International publication number: WO 2023/089731

(57) **Abstract**

A determination system according to one aspect of the present invention includes: an embedding unit that generates second audio data by embedding a plurality of watermark data in a first sequence in first audio data; a transmitting unit that transmits the second audio data via a transmission medium; a receiving unit that receives third audio data corresponding to the second audio data via a transmission medium; a detection unit that detects a plurality of watermark data in a second sequence from the received third audio data; and a determination unit that determines validity of the third audio data with respect to the first audio data, based on the plurality of watermark data having the second sequence detected from the third audio data.

## Description

### Technical Field

**The** present invention relates to a determination system and an information processing device, method, and program.

### Background Art

Conventionally, various technologies have been known for transmitting and receiving audio data via a predetermined transmission medium, such as voice calls via IP networks or mobile communication networks, and radio and television broadcasts via broadcasting radio waves. In these various technologies, various proposals have been made for technologies to verify the validity of speech contained in audio data as an indicator of whether it was made by a legitimate speaker or whether the content of the speech is valid and has not been altered.

For example, Patent Document 1 discloses a technology that acquires a speech signal of a target speaker, calculates a predetermined feature amount, calculates the similarity between the calculated feature amount and the voice information of unspecified speakers and registered speakers stored in a large-scale database, calculates the similarity rank of the voice information of the registered speaker claiming that the target speaker is the person in question in the calculated similarity, and determines that the speaker is the person in question if the rank is within a predetermined rank.

### Citation List

### Patent Document

Patent Document 1: Patent Publication JP-A-2017-223848

### Summary

### Technical Problem

However, in Patent Document 1, in order to improve the accuracy of identifying whether or not the speaker is the person in question, it is necessary to increase the number of pieces of voice information from unspecified speakers registered in the large-scale speech database. As a result, the amount of operation increases. In addition, the technology disclosed in Patent Document 1 is intended solely to identify the speaker, and it is difficult to determine the validity of the content of the speech, such as whether there are any omissions in the matters that should be explained, such as important matters explained in the real estate field.

Therefore, an object of the present invention is to provide a determination system and an information processing device, method, and program capable of determining the validity of audio data with a simple configuration.

### Solution to Problem

**A** determination system according to one aspect of the present invention includes an embedding unit that generates second audio data by embedding a plurality of watermark data in a first sequence in first audio data; a transmitting unit that transmits the second audio data via a transmission medium; a receiving unit that receives third audio data corresponding to the second audio data via a transmission medium; a detection unit that detects a plurality of watermark data in a second sequence from the received third audio data; and a determination unit that determines validity of the third audio data with respect to the first audio data based on the plurality of watermark data having the second sequence detected from the third audio data.

According to this aspect, third audio data corresponding to second audio data generated by embedding a plurality of watermark data having a first sequence in first audio data is received via a predetermined transmission medium, a plurality of watermark data in a second sequence is detected from the third audio data, and the validity of the third audio data with respect to the first audio data is determined based on the detected plurality of watermark data having the second sequence. Therefore, it is possible to determine the validity of the audio data with a simple configuration.

### Advantageous Effects of Invention

According to the present invention, it is possible to provide a determination system and an information processing device, method, and program capable of determining the validity of audio data with a simple configuration.

### Brief Description of Drawings

Fig. 1 is a diagram for explaining the overview of a determination system 1 according to the present disclosure.
Fig. 2A is a schematic diagram showing a case where embedded watermark datasets are arranged in a predetermined order.
Fig. 2B is a schematic diagram showing a case where the embedded watermark dataset is configured to correspond to user identification information.
Fig. 2C is a schematic diagram showing a case where an embedded watermark dataset is generated by executing a predetermined operation based on a predetermined key and user identification information.
Fig. 3 is a diagram showing an example of the configuration of a determination system 100 according to an embodiment.
Fig. 4 is a diagram showing an example of the hardware configuration of an information processing device 400 according to an embodiment.
Fig. 5 is a diagram showing an example of the functional configuration of a transmitting terminal 200 according to an embodiment.
Fig. 6 is a diagram showing an example of the functional configuration of a receiving terminal 300 according to an embodiment.
Fig. 7 is an operation flow diagram showing an example of the operation processing executed by the transmitting terminal 200 according to an embodiment.
Fig. 8 is an operation flow diagram showing an example of the operation processing executed by the receiving terminal 300 according to an embodiment.
Fig. 9 is a diagram showing the configuration of a determination system 101 according to a modified example of the embodiment.
Fig. 10 is an operation sequence diagram showing an example of the operation processing of the determination system 101 according to the modified example.

### Description of Embodiments

**A** preferred embodiment of the present invention will be described with reference to the attached drawings (in each figure, the same reference numerals are used to denote the same or similar configurations).

### [Overview]

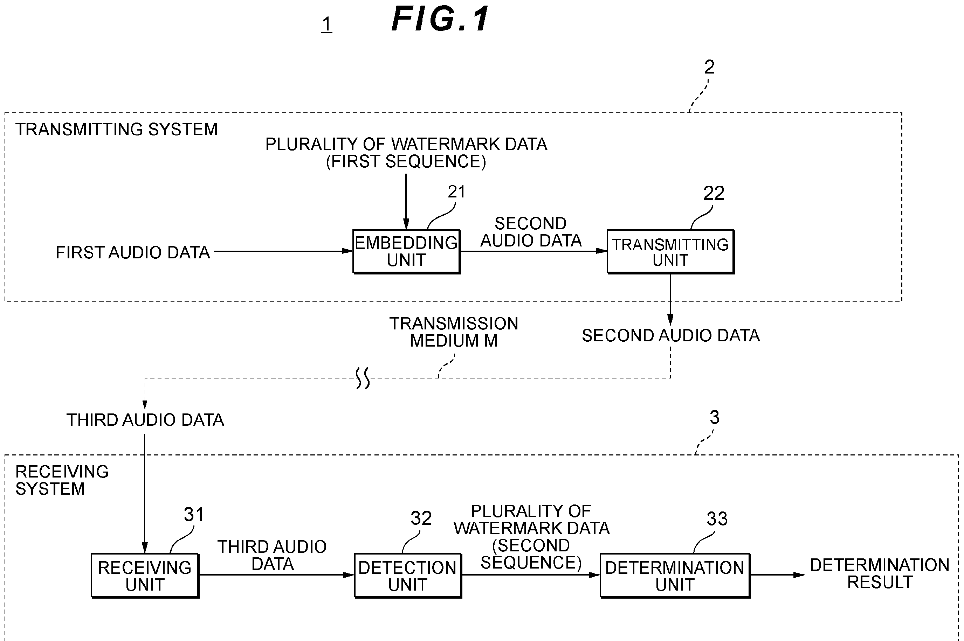

Fig. 1 is a diagram for explaining the overview of a determination system 1 according to the present disclosure. The determination system 1 is a system for determining the validity of audio data transmitted and received via a predetermined transmission medium M. The determination system 1 has, for example, a transmitting system 2 and a receiving system 3 connected to each other via the transmission medium M. The transmitting system 2 is, for example, composed of one or more information processing devices. The receiving system 3 is, for example, composed of one or more information processing devices.

The transmission medium M is a medium used for transmitting information in information communication and may be a wired communication medium or a wireless communication medium. In addition, the presence or absence of the information transmission standard for the transmission medium M and the contents thereof are not particularly limited. In particular, in the case of wireless communication, the frequency of the radio waves used for wireless communication and the presence or absence of the wireless communication standard and the contents thereof are not particularly limited for the transmission medium M. The wireless communication may include, for example, radio broadcasting (FM radio, AM radio, and the like), television broadcasting, wireless communication of mobile phones (smartphones), short-range wireless communication (wireless LAN, Wi-Fi, Bluetooth, and the like), various business radios (ship radio, aviation radio, police radio, fire radio, disaster prevention radio, and the like), and amateur radio.

The transmitting system 2 transmits audio data to the receiving system 3, for example, via the transmission medium M. The receiving system 3 receives audio data corresponding to the audio data transmitted by the transmitting system 2 via the transmission medium M, and then determines the validity of the received audio data.

**The** transmitting system 2 includes, for example, an embedding unit 21 and a transmitting unit 22. The embedding unit 21 of the transmitting system 2 generates second audio data by embedding a plurality of watermark data in a first sequence in first audio data generated by a user speaking into an audio input device such as a microphone. Here, the watermark data is also called, for example, an acoustic watermark or an audio watermark, and is audio data having features indicating information such as letters, numbers, and symbols.

**The** transmitting unit 22 of the transmitting system 2 transmits the second audio data generated by the embedding unit 21 to the receiving system 3 via the transmission medium M.

The receiving system 3 includes, for example, a receiving unit 31, a detection unit 32, and a determination unit 33. The receiving unit 31 of the receiving system 3 receives, via the transmission medium M, third audio data corresponding to the second audio data transmitted by the transmitting system 2. Here, "the third audio data corresponds to the second audio data" may particularly include cases where the third audio data has been modified based on the second audio data, regardless of whether the third audio data is substantially the same as the second audio data.

**The** detection unit 32 of the receiving system 3 detects a plurality of watermark data from the received third audio data. By this detection, a plurality of watermark data having a second sequence along the time axis of the third audio data are obtained.

**The** determination unit 33 of the receiving system 3 determines the validity of the third audio data with respect to the first audio data based on the plurality of watermark data having the second sequence detected from the third audio data. Specifically, the determination unit 33 determines the validity of the third audio data with respect to the first audio data based on the consistency between the plurality of watermark data having the first sequence embedded in the first audio data and the plurality of watermark data having the second sequence detected from the third audio data.

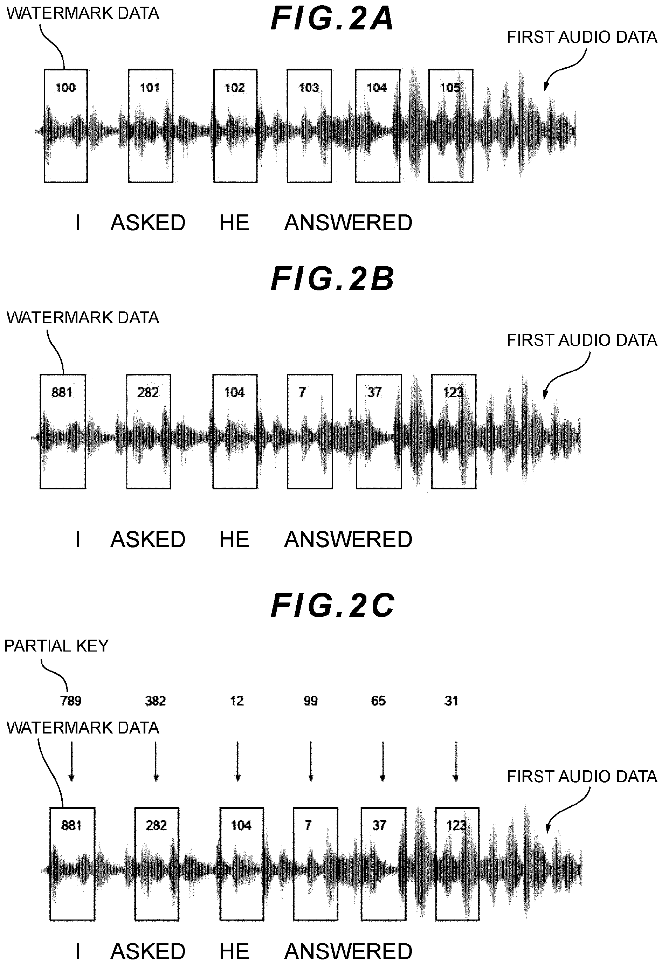

A method of determining validity using a plurality of watermark data will be described with reference to Figs. 2A to 2C. In the following, the plurality of watermark data having the first sequence embedded in the first audio data may be referred to as an "embedded watermark dataset", and the plurality of watermark data having the second sequence detected from the third audio data may be referred to as a "detected watermark dataset".

Fig. 2A is a schematic diagram showing a case where an embedded watermark dataset is arranged in a predetermined order. Fig. 2A shows first audio data indicating the speech content "I asked, he answered" and a plurality of watermark data embedded in the first audio data. The plurality of watermark data respectively indicate the numbers "100", "101", "102", "103", "104", and "105". These pieces of watermark data "100", "101", "102", "103", "104", and "105" are embedded in the first audio data by the embedding unit 21, for example, in a first sequence in which the numbers indicated by the watermark data are in ascending order along the time axis of the first audio data from left to right on the page.

As shown in Fig. 2A, the pieces of watermark data "100", "101", "102", "103", "104", and "105" are arranged in ascending order as a predetermined order. In this way, the embedded watermark dataset may be configured to be arranged in a predetermined order such as ascending order of numbers. Note that the predetermined order is not limited to known orders such as alphabetical order, Japanese syllabary order, ascending or descending order of numbers, and the like, as long as it is determined according to the letters, numbers, and symbols indicated by each piece of watermark data and may be any order that can be referenced by at least the determination unit 33.

In this way, in the determination system 1, the embedded watermark dataset may be configured to be arranged in a predetermined order. This allows the determination unit 33 of the receiving system 3 to determine the consistency between the embedded watermark dataset and the detected watermark dataset. Here, the consistency between the embedded watermark dataset and the detected watermark dataset is an index that quantitatively and/or qualitatively indicates the degree to which the detected watermark dataset is consistent with the embedded watermark dataset. In other words, the consistency is an index that quantitatively and/or qualitatively indicates the degree to which the detected watermark dataset matches the embedded watermark dataset.

In the consistency between the embedded watermark dataset and the detected watermark dataset, loss, contamination, replacement, and the like in the detected watermark dataset based on the embedded watermark dataset may be taken into consideration. Here, loss in the detected watermark dataset means that specific watermark data of the embedded watermark dataset is lost in the detected watermark dataset. For example, in the example shown in Fig. 2A, the loss in the detected watermark dataset means that at least one of the six pieces of watermark data "100", "101", "102", "103", "104", and "105" is lost in the detected watermark dataset. Moreover, the contamination in the detected watermark dataset means that watermark data other than the embedded watermark dataset is contaminated in the detected watermark dataset. For example, in the example shown in Fig. 2A, the contamination in the detected watermark dataset means that watermark data other than the six pieces of watermark data "100", "101", "102", "103", "104", and "105" (for example, watermark data indicating "200") is contaminated in the detected watermark dataset. Moreover, the replacement in the detected watermark dataset means that certain watermark data in the embedded watermark dataset is replaced with another watermark data. For example, in the example shown in Fig. 2A, the replacement in the detected watermark dataset means that one watermark data (for example, the third watermark data "102") among the six pieces of watermark data "100", "101", "102", "103", "104", and "105" is replaced with another watermark data (for example, the fifth watermark data "104").

Then, the determination unit 33 determines the reproducibility of the first audio data in the third audio data as a determination of the validity of the third audio data with respect to the first audio data, for example, based on the consistency between the embedded watermark dataset and the detected watermark dataset. Here, the reproducibility of the first audio data in the third audio data is an index that quantitatively and/or qualitatively indicates the degree to which the third audio data reproduces the first audio data. In other words, the reproducibility is an index that quantitatively and/or qualitatively indicates the degree to which the third audio data matches the first audio data. The correspondence between the degree of consistency between the embedded watermark dataset and the detected watermark dataset and the degree of reproducibility of the first audio data in the third audio data may be set arbitrarily. In particular, when the reproducibility of the first audio data in the third audio data is expressed by two values such as "reproduced" and "not reproduced", the degree of consistency (the consistency between the embedded watermark dataset and the detected watermark dataset) required for the determination unit 33 to determine "reproduced", that is, the tolerance of reproducibility, may also be set arbitrarily.

Fig. 2B is a schematic diagram showing a case where the embedded watermark dataset is configured to correspond to user identification information. Fig. 2B shows a case where a plurality of watermark data embedded in the first audio data respectively indicate the numbers "881", "282", "104", "7", "37", and "123". Here, the arrangement (881, 282, 104, 7, 37, 123) formed by arranging these numbers in this order corresponds to user identification information indicating a specific user. That is, in the example shown in Fig. 2B, the embedded watermark dataset is configured to correspond to user identification information.

In this way, in the determination system 1, the embedded watermark dataset may be configured to correspond to user identification information. Here, since the user identification information is an example of the above-mentioned predetermined order, the determination unit 33 can determine the reproducibility of the first audio data in the third audio data based on the consistency between the embedded watermark dataset and the detected watermark dataset.

Furthermore, since the embedded watermark dataset is configured to correspond to user identification information, the determination unit 33 can also determine the identity of the user associated with the first audio data and the user associated with the third audio data as a determination of the validity of the third audio data with respect to the first audio data based on the consistency between the embedded watermark dataset and the detected watermark dataset. Here, the identity between the user associated with the first audio data and the user associated with the third audio data is an index that quantitatively and/or qualitatively indicates the degree to which the speaker of the voice indicated by the third audio data matches the speaker of the voice indicated by the first audio data. The identity may be defined based on, for example, a false rejection rate (FRR), which is the rate at which a person tries to authenticate but is not recognized as himself/herself and is rejected, or a false acceptance rate (FAR), which is the rate at which a person is mistakenly recognized as someone else and accepted. The correspondence between the degree of consistency between the embedded watermark dataset and the detected watermark dataset and the degree of identity between the user associated with the first audio data and the user associated with the third audio data may be set arbitrarily.

Fig. 2C is a schematic diagram showing a case in which the embedded watermark dataset is configured to be generated by executing a predetermined operation based on a predetermined key and user identification information. Here, the predetermined key is composed of a plurality of partial keys having a third sequence, for example. As an example, Fig. 2C shows a plurality of partial keys representing the numbers "789", "382", "12", "99", "65", and "31". Here, it is assumed that the arrangement (789, 382, 12, 99, 65, 31) formed by arranging these partial keys in the third sequence (in the example shown in Fig. 2C, the sequence from left to right on the paper) constitutes the predetermined key.

Furthermore, the watermark data "881" is generated by executing a predetermined operation based on the partial key "789" and the user identification information. Similarly, the pieces of watermark data "282", "104", "7", "37", and "123" are generated by executing a predetermined operation based on the partial keys "382", "12", "99", "65", and "31", respectively, and the user identification information. Here, the user identification information may be configured as information without a sequence (for example, the number "12345"), unlike the case described with reference to Fig. 2B. The embedding unit 21 of the transmitting system 2 may generate each piece of watermark data of the embedded watermark dataset by executing a predetermined operation based on these partial keys and the user identification information, for example. That is, for example, the embedding unit 21 may generate pieces of watermark data "881", "282", "104", "7", "37", and "123" by executing a predetermined operation based on each of the partial keys "789", "382", "12", "99", "65", and "31" and the user identification information (for example, the number "12345").

In this way, in the determination system 1, the embedded watermark dataset may be generated by executing a predetermined operation based on a predetermined key composed of a plurality of partial keys having a third sequence and user identification information. Then, the embedding unit 21 may generate the embedded watermark dataset by executing a predetermined operation based on the predetermined key and user identification information.

**As** a result, the determination unit 33 of the receiving system 3 can determine the consistency between the embedded watermark dataset and the detected watermark dataset by checking whether the detected watermark dataset is generated by executing a predetermined operation based on the above-mentioned predetermined key and user identification information, and can first determine the reproducibility of the first audio data in the third audio data based on the consistency. Furthermore, since the embedded watermark dataset is generated by executing a predetermined operation based on the above-mentioned predetermined key and user identification information, the determination unit 33 can determine the identity of the user associated with the first audio data and the user associated with the third audio data as a determination of the validity of the third audio data with respect to the first audio data based on the consistency. In this configuration, since the information (predetermined key) having a sequence (third sequence) and the user identification information can be separated, for example, it is possible to share the predetermined key among a plurality of users while limiting the sharing of the user identification information to only a predetermined user, and the management of the user identification information becomes easier.

### [Embodiment]

### (1) Overall Configuration

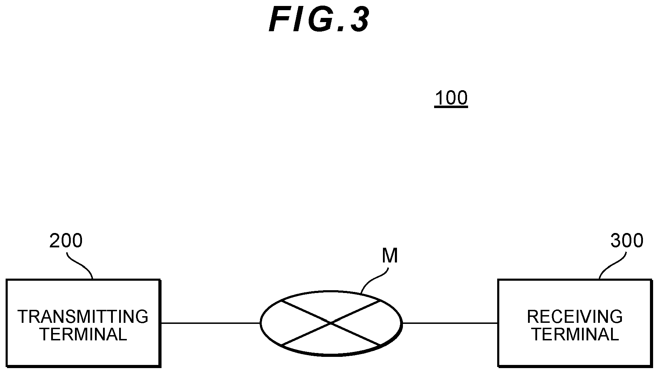

Fig. 3 is a diagram showing an example of the configuration of a determination system 100 according to an embodiment. As shown in Fig. 3, the determination system 100 according to the embodiment includes a transmitting terminal 200 and a receiving terminal 300. The transmitting terminal 200 and the receiving terminal 300 are connected to each other so that they can transmit and receive audio data via the predetermined transmission medium M, for example. The transmitting terminal 200 corresponds to the transmitting system 2 described above and transmits second audio data obtained by embedding a plurality of watermark data in the first audio data to be evaluated for validity to the receiving terminal 300 via the transmission medium M. The receiving terminal 300 corresponds to the receiving system 3 described above, and receives third audio data corresponding to the second audio data transmitted from the transmitting terminal 200, and determines the validity of the third audio data with respect to the first audio data based on the plurality of watermark data detected from the third audio data.

### (2) Hardware Configuration

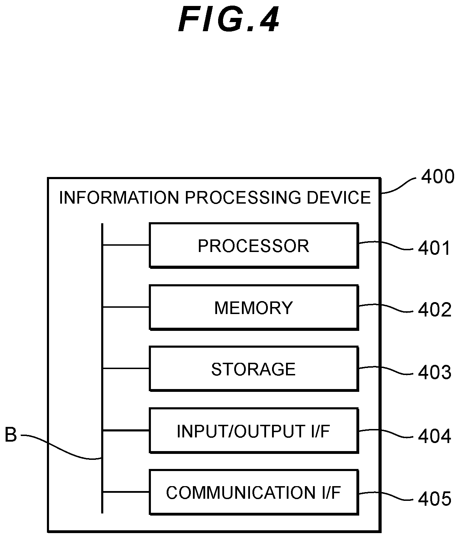

Fig. 4 is a diagram showing an example of the hardware configuration of an information processing device 400 according to the embodiment. Each of the transmitting terminal 200 and the receiving terminal 300 according to the embodiment is, for example, configured by one or more information processing devices 400. The information processing device 400 includes a computer, and specifically, is a server device, a personal computer (PC), a PDA (Personal Digital Assistant), a mobile information terminal such as a smartphone or a tablet terminal, a mobile phone, and the like but is not limited to these.

The information processing device 400 has a processor 401, a memory 402, a storage 403, an input/output interface (input/output I/F) 404, and a communication interface (communication I/F) 405. The hardware components of the information processing device 400 are connected to each other, for example, via a bus B. The information processing device 400 realizes the functions and/or methods described in this disclosure through cooperation between the processor 401, the memory 402, the storage 403, the input/output I/F 404, and the communication I/F 405.

The processor 401 executes the functions and/or methods realized by the code or instructions included in the program stored in the storage 403. The processor 401 may include, for example, a central processing unit (CPU), an MPU (Micro Processing Unit), a GPU (Graphics Processing Unit), a microprocessor, a processor core, a multiprocessor, an ASIC (Application-Specific Integrated Circuit), an FPGA (Field Programmable Gate Array), and the like. The processor 401 may realize each process disclosed in the embodiments by a logic circuit (hardware) or a dedicated circuit formed in an integrated circuit (IC) chip, LSI (Large Scale Integration)), and the like.

**The** memory 402 temporarily stores the program loaded from the storage 403 and provides a working area for the processor 401. The memory 402 also temporarily stores various types of data generated while the processor 401 is executing the program. The memory 402 includes, for example, a RAM (Random Access Memory) and a ROM (Read Only Memory).

The storage 403 stores, for example, a program. The storage 403 includes, for example, an HDD (Hard Disk Drive), an SSD (Solid State Drive), and a flash memory.

The input/output I/F 404 includes an input device that inputs various types of information to the information processing device 400 and an output device that outputs the processing results processed by the information processing device 400. The input/output I/F 404 may be integrated for an input device and an output device or may be separated for an input device and an output device.

The input device accepts input from an operator and supplies information related to the input to the processor 401. The input device may include, for example, a touch panel, a touch display, hardware keys such as a keyboard, an operation input device such as a pointing device such as a mouse, an image input device such as a camera, and an audio input device such as a microphone.

The output device outputs the processing result processed by the processor 401. The output device may include, for example, a display device that can display an image (including a video) according to display data (screen information) as the processing result processed by the processor 401. The display device may include, for example, a touch panel, a touch display, a monitor (for example, a liquid crystal display, an OELD (Organic Electroluminescence Display), and the like), a head-mounted display (HMD), a projection mapping, a hologram, and the like. The output device may include, for example, an audio output device that can output sound according to audio data as a processing result processed by the processor 401. The audio output device may include, for example, a speaker and the like.

The communication I/F 405 transmits and receives various types of data via the transmission medium M. The communication may be performed in either a wired or wireless (including short-range wireless communication) manner and any communication protocol may be used as long as the communication between devices can be performed. The communication I/F 405 has a function of performing communication with other information processing devices or apparatuses via the transmission medium M. The communication I/F 405 transmits various types of data to other information processing devices according to instructions from the processor 401. The communication I/F 405 also receives various types of data transmitted from other information processing devices or apparatuses and supplies the data to the processor 401.

The program of the embodiment may be provided in a state stored in a computer-readable storage medium. The storage medium may store the program in a "non-transitory tangible medium". The program may include, for example, a software program or a computer program. The storage medium may include, where appropriate, one or more semiconductor-based or other integrated circuits (ICs) (for example, field programmable gate arrays (FPGAs), application-specific ICs (ASICs), and the like), hard disk drives (HDDs), hybrid hard drives (HHDs), optical discs, optical disc drives (ODDs), magneto-optical discs, magneto-optical drives, floppy diskettes, floppy disk drives (FDDs), magnetic tapes, solid state drives (SSDs), RAM drives, secure digital cards or drives, any other suitable storage media, or any suitable combination of two or more of these. The storage medium may be volatile, non-volatile, or a combination of volatile and non-volatile, as appropriate.

The program of the present disclosure may be provided to the information processing device 400 via any network capable of transmitting the program. In addition, the embodiment may be realized in the form of a data signal embedded in a carrier wave, in which the program is embodied by electronic transmission. Note that the program of the present disclosure may be implemented using, for example, a scripting language such as ActionScript or JavaScript (registered trademark), an object-oriented programming language such as Objective-C or Java (registered trademark), or a markup language such as HTML5.

**At** least a part of the processing in the information processing device 400 may be realized by cloud computing consisting of one or more computers. At least a part of the processing in the information processing device 400 may be configured to be performed by another information processing device. In this case, at least a part of the processing of each functional unit realized by the processor 401 may be configured to be performed by another information processing device.

### (3) Functional Configuration

### (3-1) Transmitting Terminal 200

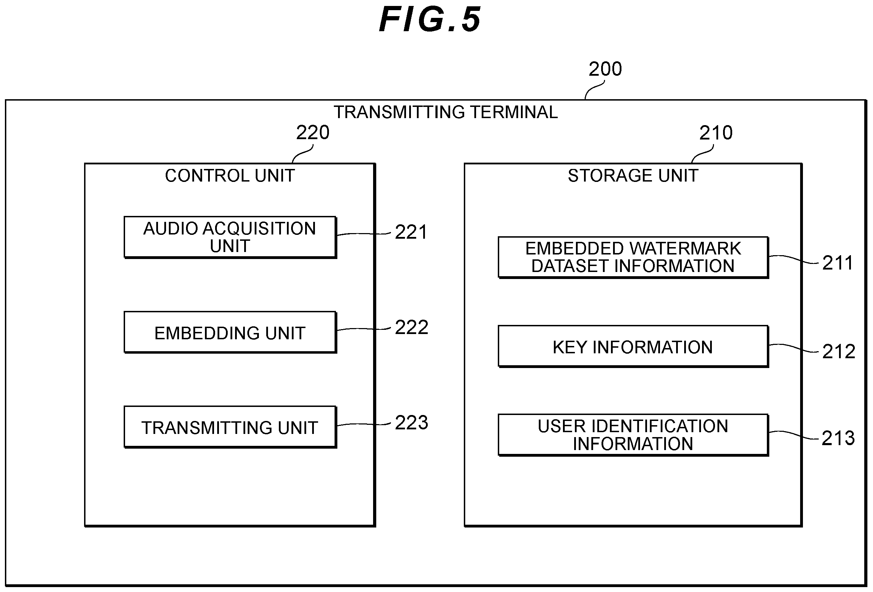

Fig. 5 is a diagram showing an example of the functional configuration of the transmitting terminal 200 according to the embodiment. As shown in Fig. 5, the transmitting terminal 200 has, for example, a storage unit 210 and a control unit 220. Each functional unit disclosed in Fig. 5 is realized by the cooperation of the processor 401, the memory 402, the storage 403, the input/output I/F 404, and the communication I/F 405 of the information processing device 400. Specifically, the storage unit 210 is realized by, for example, the memory 402 and/or the storage 403, and the control unit 220 is realized by, for example, the input/output I/F 404, the communication I/F 405, and the processor 401.

The storage unit 210 stores, for example, embedded watermark dataset information, key information, and user identification information.

The embedded watermark dataset information is information on the embedded watermark dataset, that is, information on a plurality of watermark data having a first sequence and may be specified in a format such as the arrangement (881, 282, 104, 7, 37, 123) described with reference to Fig. 2A. As described later, the embedded watermark dataset information may be referenced, for example, when the embedding unit 222 of the control unit 220 embeds a plurality of watermark data in the first audio data. Note that the embedded watermark dataset indicated by the embedded watermark dataset information may be configured to correspond to the user identification information.

The key information may be, for example, information such as a predetermined letter, number, and symbol. The key information may be, for example, composed of a plurality of partial keys having a third sequence and may be specified in a format such as the arrangement (789, 382, 12, 99, 65, 31) described with reference to Fig. 2C. The user identification information is information for identifying a user and may be composed of predetermined letters, numbers, symbols, and the like. Note that the user identification information may be configured as information without a sequence (for example, the number "12345"), unlike the case described with reference to Fig. 2B. The key information and the user identification information are used, for example, by the embedding unit 222 of the control unit 220 to generate embedded watermark dataset information, as described later.

The control unit 220 has, for example, an audio acquisition unit 221, an embedding unit 222, and a transmitting unit 223.

The audio acquisition unit 221 acquires, for example, first audio data. Specifically, the audio acquisition unit 221 controls an audio input device such as a microphone included in the input/output I/F 404 to generate audio data based on the user's voice speaking into the audio input device, thereby acquiring the audio data as the first audio data. Note that the audio acquisition unit 221 may acquire audio data stored in advance in the storage unit 210 or the like as the first audio data.

The embedding unit 222 generates second audio data by, for example, embedding a plurality of watermark data in the first audio data acquired by the audio acquisition unit 221 in a first sequence along the time axis of the first audio data. The embedding unit 222 may execute the embedding by referring to the embedded watermark dataset information stored in the storage unit 210, for example. Note that the embedding unit 222 may repeatedly embed all pieces of watermark data included in the embedded watermark dataset into the first audio data.

The embedding unit 222 may, for example, determine whether a predetermined embedding condition for embedding watermark data in the first audio data is satisfied for each piece of watermark data included in the embedded watermark dataset. Then, when it is determined that the embedding condition is satisfied, the embedding unit 222 may embed the watermark data at a predetermined embedding position in the first audio data.

The embedding condition may, for example, include the arrival of a predetermined periodic or non-periodic timing that can be set arbitrarily. The embedding condition may also, for example, include the acquisition of a predetermined embedding instruction. The embedding instruction may be generated in response to a user's input operation on an operation input device included in the input/output I/F 404 of the transmitting terminal 200 or may be acquired by the transmitting terminal 200 from another information processing device.

The embedding position of each piece of watermark data in the first audio data may be a position corresponding to the timing, at which it is determined that the embedding condition is satisfied, in the first audio data acquired by the audio acquisition unit 221. The pitches between a plurality of embedding positions may be periodic or non-periodic.

The pitch between the predetermined timings that define the embedding condition may be arbitrarily set. The shorter the pitch, the higher the accuracy of the determination unit 323 of the receiving terminal 300 in determining the consistency between the embedded watermark dataset and the detected watermark dataset, and thus the accuracy of the validity of the third audio data with respect to the first audio data is also improved.

The embedding unit 222 may generate the embedded watermark dataset based on the key information and the user identification information stored in the storage unit 210. Specifically, the embedding unit 222 may generate each piece of watermark data that constitutes the embedded watermark dataset by executing a predetermined operation based on each partial key that constitutes the key information and the user identification information. Here, the content of the predetermined operation is not particularly limited as long as it can generate each piece of watermark data based on the partial key and the user identification information and may include, for example, a logical operation such as an exclusive OR, an arbitrary algorithm such as an encoding algorithm or an encryption algorithm, an arbitrary function, and the like.

The transmitting unit 223 transmits various types of information to another information processing device such as the receiving terminal 300, for example, via the predetermined transmission medium M. The transmitting unit 223 transmits, for example, the second audio data to the receiving terminal 300 via the predetermined transmission medium M.

The transmitting unit 223 may, for example, determine whether a predetermined transmission condition for transmitting the second audio data is satisfied. Then, when it is determined that the transmission condition is satisfied, for example, the transmitting unit 223 may transmit the second audio data generated by the embedding unit 222 to the receiving terminal 300 via the predetermined transmission medium M. The transmission condition may include, for example, the arrival of a periodic or non-periodic predetermined timing that can be arbitrarily set. The transmission condition may include, for example, the acquisition of a predetermined transmission instruction.

### (3-2) Receiving Terminal 300

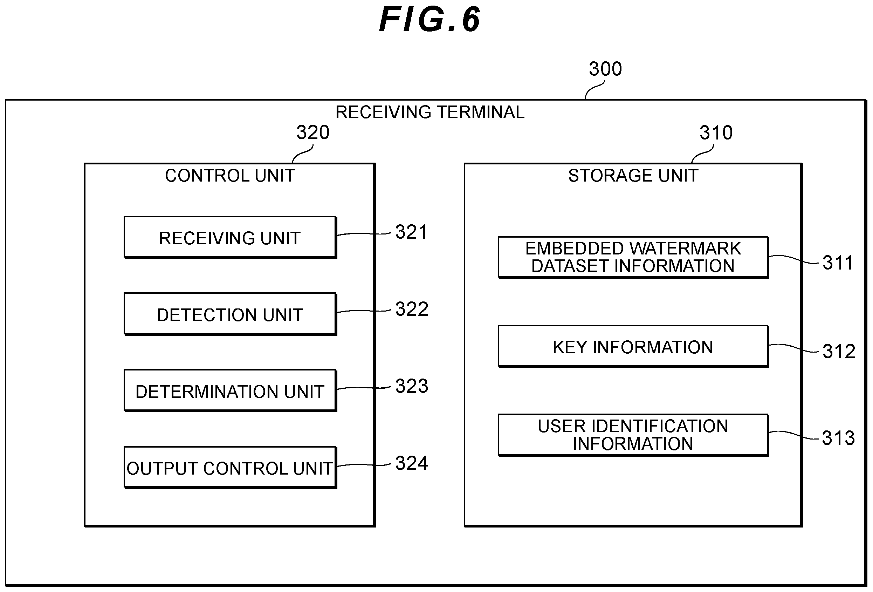

Fig. 6 is a diagram showing an example of the functional configuration of the receiving terminal 300 according to the embodiment. As shown in Fig. 6, the receiving terminal 300 has, for example, a storage unit 310 and a control unit 320. Each functional unit disclosed in Fig. 6 is realized by the cooperation of the processor 401, the memory 402, the storage 403, the input/output I/F 404, and the communication I/F 405 of the information processing device 400. Specifically, the storage unit 310 is realized by, for example, the memory 402 and/or the storage 403, and the control unit 320 is realized by, for example, the input/output I/F 404, the communication I/F 405, and the processor 401.

**The** storage unit 310 stores, for example, embedded watermark dataset information, key information, and user identification information.

The embedded watermark dataset information may be information on the embedded watermark dataset similar to that stored in the storage unit 210 of the transmitting terminal 200, that is, information on a plurality of watermark data having the first sequence. The embedded watermark dataset information may be referred to, for example, when the determination unit 323 of the control unit 320 of the receiving terminal 300 determines the validity of the third audio data with respect to the first audio data based on the plurality of watermark data (detected watermark dataset) having the second sequence detected from the third audio data by the detection unit 322.

Note that the embedded watermark dataset information stored in the storage unit 310 of the receiving terminal 300 may be information generated based on the plurality of watermark data having the first sequence, rather than information on the plurality of watermark data having the first sequence themselves. Here, the information generated based on the plurality of watermark data having the first sequence may be, for example, a string in which letters, numbers, symbols, and the like indicated by each piece of watermark data are connected in the first sequence. For example, in the case of the example shown in Fig. 2B, the string of numbers "881282104737123" obtained by connecting the pieces of watermark data "881", "282", "104", "7", "37", and "123" in order along the time axis of the first audio data corresponds to the information. The determination unit 323 of the receiving terminal 300 may refer to the information when determining the validity of the third audio data with respect to the first audio data.

**As** described above, the key information is, for example, information such as predetermined letters, numbers, and symbols, similar to that stored in the storage unit 210 of the transmitting terminal 200, and is composed of a plurality of partial keys having a third sequence. The user identification information is, for example, information for identifying a user, similar to that stored in the storage unit 210 of the transmitting terminal 200 and may be composed of predetermined letters, numbers, and symbols. Note that the user identification information may be configured as information without a sequence (for example, the number "12345"), unlike the case described with reference to Fig. 2B. The key information and user identification information are used, for example, by the determination unit 323 of the control unit 320 to verify the detected watermark dataset, as described below.

Note that if the determination unit 323 is configured to determine only the reproducibility of the first audio data in the third audio data as the determination of the validity of the third audio data with respect to the first audio data, and not to determine the identity of the user associated with the first audio data and the user associated with the third audio data, the storage unit 310 may not need to store, for example, the key information and the user identification information.

The control unit 320 may include, for example, a receiving unit 321, a detection unit 322, a determination unit 323, and an output control unit 324.

The receiving unit 321 receives various types of information from, for example, another information processing device such as the transmitting terminal 200 via the predetermined transmission medium M. The receiving unit 321 receives, for example, third audio data corresponding to the second audio data transmitted by the transmitting terminal 200 from the transmitting terminal 200 via the predetermined transmission medium M.

The detection unit 322 detects, for example, a plurality of watermark data from the received third audio data. By this detection, a plurality of watermark data (detected watermark dataset) having a second sequence along the time axis of the third audio data are obtained.

The determination unit 323 determines the validity of the third audio data with respect to the first audio data based on, for example, the plurality of watermark data (detected watermark dataset) having the second sequence detected from the third audio data.

The determination unit 323 may determine whether a predetermined determination execution condition for determining the validity of the third audio data with respect to the first audio data is satisfied. Then, the determination unit 323 may execute the determination of the validity, for example, when it is determined that the determination execution condition is satisfied. The determination execution condition may include, for example, the arrival of a predetermined periodic or non-periodic timing that can be set arbitrarily. The determination execution condition may also include, for example, the detection of a predetermined number of pieces of watermark data as a unit of determination from the third audio data, or the detection of predetermined specific watermark data from the third audio data. The determination execution condition may also include, for example, the acquisition of a predetermined determination instruction. The determination instruction may be generated in response to a user's input operation on an operation input device of the input/output I/F 404 of the receiving terminal 300 or may be acquired by the receiving terminal 300 from another information processing device.

The determination unit 323 determines the validity of the third audio data with respect to the first audio data, for example, based on the consistency between the embedded watermark dataset obtained by referring to the embedded watermark dataset information stored in the storage unit 310 and the plurality of watermark data (detected watermark dataset) having the second sequence detected from the third audio data. Note that the range of watermark data included in the detected watermark dataset that is the subject of the determination of the validity by the determination unit 323 may be defined arbitrarily. For example, the range may be defined as the number of pieces of watermark data included in the detected watermark dataset or may be defined as the watermark data detected in a period having a predetermined length in the detected watermark dataset.

The determination unit 323 may, for example, calculate an index that quantitatively and/or qualitatively indicates the degree of matching between the embedded watermark dataset and the detected watermark dataset by comparing each piece of watermark data included in the embedded watermark dataset with each piece of watermark data included in the detected watermark dataset as an index indicating the consistency between the two watermark datasets. In calculating the index indicating the consistency, loss, contamination, replacement, and the like in the detected watermark dataset based on the embedded watermark dataset may be taken into consideration.

The determination unit 323 determines the validity of the third audio data with respect to the first audio data, for example, based on the index indicating the consistency between the embedded watermark dataset and the detected watermark dataset. For example, as described with reference to Fig. 2A, when the embedded watermark dataset is configured to be arranged in a predetermined order, the content of the determined validity may be the reproducibility of the first audio data in the third audio data. In addition, for example, as described with reference to Fig. 2B, when the embedded watermark dataset is configured to correspond to user identification information, the content of the determined validity may include the identity of the user associated with the first audio data and the user associated with the third audio data, in addition to the reproducibility of the first audio data in the third audio data. In addition, for example, as described with reference to Fig. 2C, when the embedded watermark dataset is configured to be generated by executing a predetermined operation based on a predetermined key and user identification information, the determination unit 323 checks whether the detected watermark dataset is generated by executing a predetermined operation based on the above-mentioned predetermined key and user identification information. In this case, the content of the determined validity may include the identity of the user associated with the first audio data and the user associated with the third audio data, in addition to the reproducibility of the first audio data in the third audio data. Note that the result of the determination of validity from the determination unit 323 may be an index that quantitatively and/or qualitatively indicates the degree of validity and may include, for example, not only an index indicating whether it is valid, but also a numerical value, a rank, or the like indicating the degree of validity.

The output control unit 324 controls, for example, the output by the output device included in the input/output I/F 404 of the receiving terminal 300. The output control unit 324 controls, for example, the audio output device of the output device to output sound or the like based on the third audio data. The output control unit 324 also controls, for example, the display device of the output device to display an image (including a video) based on predetermined display data. The output control unit 324 also controls, for example, the output device (audio output device or display device) to output the result of the determination from the determination unit 323 regarding the validity of the third audio data with respect to the first audio data.

### (3-3) Other Functional Configuration

The transmitting terminal 200 may further include an image acquisition unit (not shown) that acquires image data. The image acquisition unit may, for example, control the image input device of the input/output I/F 404 to acquire image data generated by capturing an image of the user of the transmitting terminal 200, may acquire image data stored in advance in the storage unit 210 or may acquire image data generated by the control unit 220 to be supplied to the display device. The transmitting unit 223 of the transmitting terminal 200 may further transmit various types of image data acquired by the image acquisition unit to the receiving terminal 300. This allows, for example, the output control unit 324 of the receiving terminal 300 to display an image based on the image data received from the transmitting terminal 200 on the display device, thereby enabling communication not only by voice but also by image.

The transmitting terminal 200 may further have functional units similar to the receiving unit 321 and output control unit 324 of the receiving terminal 300. The receiving terminal 300 may further have functional units similar to the audio acquisition unit 221, the transmitting unit 223, and the image acquisition unit included in the transmitting terminal 200. This allows the receiving terminal 300 to transmit audio data and image data to the transmitting terminal 200 and enables voice and video calls between the transmitting terminal 200 and the receiving terminal 300.

The receiving terminal 300 may have a functional unit similar to the embedding unit 222 of the transmitting terminal 200. The transmitting terminal 200 may also have a functional unit similar to the detection unit 322 and the determination unit 323 of the receiving terminal 300. This allows the transmitting terminal 200 to determine the validity of the audio data received from the receiving terminal 300.

### (4) Operation Processing

### (4-1) Operation Processing of Transmitting Terminal 200

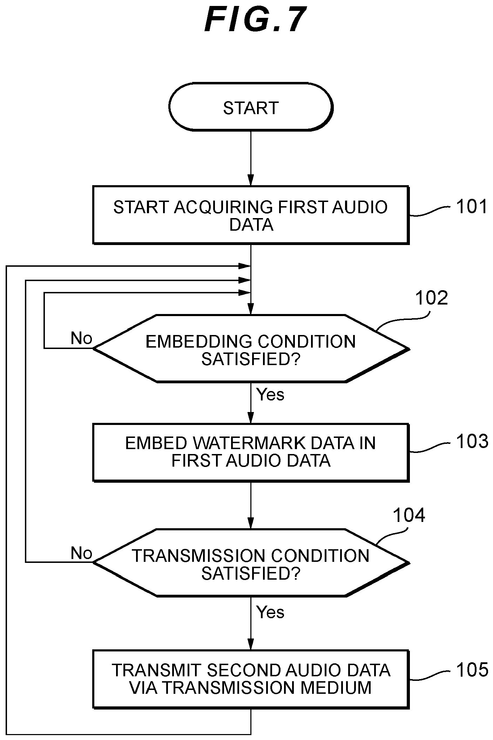

Fig. 7 is an operation flow diagram showing an example of the operation processing executed by the transmitting terminal 200 according to the embodiment.

### (S101)

First, the audio acquisition unit 221 of the transmitting terminal 200 starts acquiring the first audio data.
As a result, the audio acquisition unit 221 controls, for example, an audio input device such as a microphone included in the input/output I/F 404 to sequentially generate first audio data based on the voice of the user speaking into the audio input device.

### (S102)

Next, the embedding unit 222 of the transmitting terminal 200 determines whether a predetermined embedding condition for embedding watermark data in the first audio data is satisfied. Here, the predetermined embedding condition may include, for example, the arrival of a predetermined periodic or non-periodic timing. The predetermined embedding condition may also include, for example, the acquisition of a predetermined embedding instruction. The predetermined embedding instruction may be generated in response to an input operation by a user (including a speaker) on an operation input device included in the input/output I/F 404 of the transmitting terminal 200 or may be acquired from another information processing device. The step S102 is repeated, for example, at a predetermined cycle (S102: No).

### (S103)

Next, when it is determined that the predetermined embedding condition is satisfied (S102: Yes), the embedding unit 222 of the transmitting terminal 200 generates second audio data by embedding predetermined watermark data according to the first sequence at a position in the first audio data corresponding to the timing at which it is determined that the predetermined embedding condition is satisfied. The embedding unit 222 may generate each piece of watermark data to be embedded in the first audio data by executing a predetermined operation based on the key information and user identification information stored in the storage unit 210 and embed the watermark data in the first audio data.

### (S104)

Next, the transmitting unit 223 of the transmitting terminal 200 determines whether a predetermined transmission condition is satisfied. Here, the predetermined transmission condition may include, for example, the arrival of a periodic or non-periodic predetermined timing. When it is determined that the predetermined transmission condition is not satisfied (S104: No), the processing returns to step S102.

### (S105)

On the other hand, if it is determined that the transmission condition is satisfied (S104: Yes), the transmitting unit 223 of the transmitting terminal 200 transmits the second audio data generated in step S103 to the receiving terminal 300 via the predetermined transmission medium M. After that, the processing of the transmitting terminal 200 returns to step S102, and thereafter, the above-mentioned steps S102 to S105 are repeated until a predetermined termination condition is satisfied.

### (4-2) Operation Processing of Receiving Terminal 300

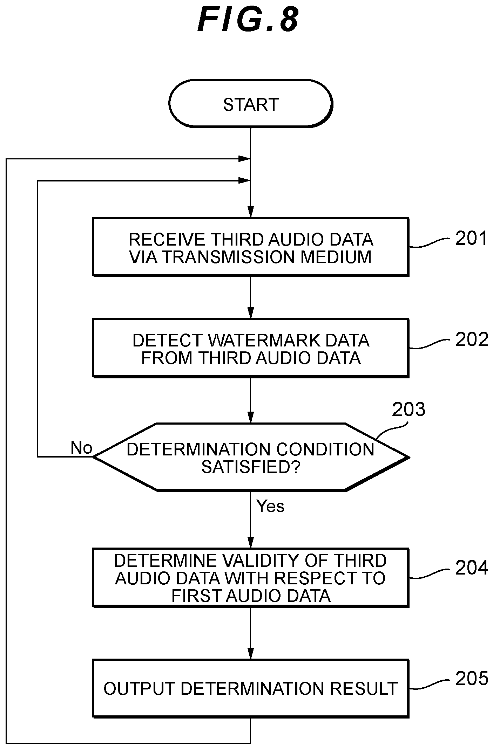

Fig. 8 is an operation flow diagram showing an example of the operation processing executed by the receiving terminal 300 according to the embodiment.

### (S201)

When the transmitting unit 223 of the transmitting terminal 200 transmits the second audio data to the receiving terminal 300 via the predetermined transmission medium M (step S105), the receiving unit 321 of the receiving terminal 300 receives the third audio data corresponding to the second audio data via the predetermined transmission medium M. The output control unit 324 of the receiving terminal 300 may control the audio output device of the input/output I/F 404 to output sound based on the received third audio data.

### (S202)

Next, the detection unit 322 of the receiving terminal 300 detects watermark data in a second sequence along the time axis of the third audio data from the received third audio data. The detection unit 322 stores the plurality of watermark data having the second sequence detected from the third audio data in the storage unit 310.

### (S203)

Next, the determination unit 323 of the receiving terminal 300 determines whether a predetermined determination execution condition for determining the validity of the third audio data with respect to the first audio data is satisfied. Here, the predetermined determination execution condition may include, for example, the arrival of a periodic or non-periodic predetermined timing. The determination execution condition may include, for example, the detection of a predetermined number of pieces of watermark data as a unit of determination from the third audio data, or the detection of predetermined specific watermark data from the third audio data. The predetermined determination execution condition may include, for example, the acquisition of a predetermined determination instruction. The predetermined determination instruction may be generated in response to a user's input operation on an operation input device of the input/output I/F 404 of the receiving terminal 300 or may be acquired from another information processing device. If it is determined that the determination execution condition is not satisfied (S203: No), the processing returns to step S201.

### (S204)

Next, when it is determined that the predetermined determination execution condition is satisfied (S203: Yes), the determination unit 323 of the receiving terminal 300 determines the validity of the third audio data with respect to the first audio data based on a plurality of watermark data (detected watermark dataset) having the second sequence detected from the third audio data.

Specifically, the determination unit 323 first calculates an index indicating the consistency between the two watermark datasets by comparing each piece of watermark data included in the embedded watermark dataset information stored in the storage unit 310 with each piece of watermark data included in the detected watermark dataset. Then, the determination unit 323 determines the validity of the third audio data with respect to the first audio data based on the index indicating the consistency. For example, as described with reference to Fig. 2A, when the embedded watermark dataset is configured to be arranged in a predetermined order, the content of the determined validity may be the reproducibility of the first audio data in the third audio data. In addition, for example, as described with reference to Fig. 2B, when the embedded watermark dataset is configured to correspond to user identification information, the content of the determined validity may include the identity of the user associated with the first audio data and the user associated with the third audio data, in addition to the reproducibility of the first audio data in the third audio data. In addition, for example, as described with reference to Fig. 2C, when the embedded watermark dataset is configured to be generated by executing a predetermined operation based on a predetermined key and user identification information, the determination unit 323 checks whether the detected watermark dataset is generated by executing a predetermined operation based on the above-mentioned predetermined key and user identification information. In this case, the content of the determined validity may include the identity of the user associated with the first audio data and the user associated with the third audio data, in addition to the reproducibility of the first audio data in the third audio data.

### (S205)

Next, the output control unit 324 of the receiving terminal 300 controls the output device of the input/output I/F 404 to output the determination result from the determination unit 323 on the validity of the third audio data with respect to the first audio data. The output control unit 324 may display, for example, the result of the determination of validity (not only an indicator of whether the data is valid, but also a numerical value or a rank indicating the degree of validity and the like) on a display device. The output control unit 324 may also output, for example, a sound indicating the result of the determination of validity from an audio output device. After that, the processing of the receiving terminal 300 returns to step S201, and thereafter, steps S201 to S205 described above are repeated until a predetermined end condition is satisfied.

### [Modified Example]

### (1) Overall Configuration

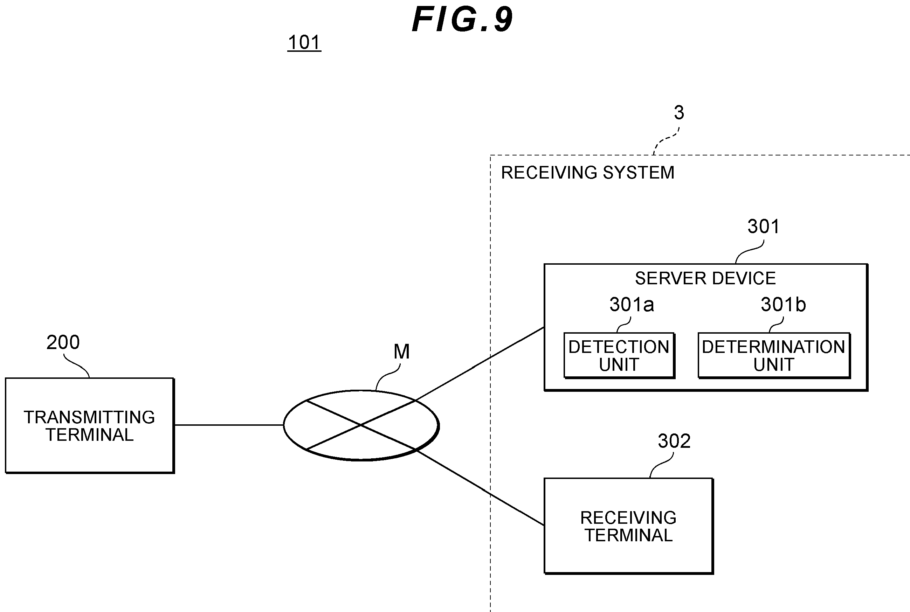

Fig. 9 is a diagram showing the configuration of a determination system 101 according to a modified example of the above-mentioned embodiment.

**As** shown in Fig. 9, the determination system 101 according to this modified example has a transmitting terminal 200 and a receiving system 3. The receiving system 3 has a server device 301 and a receiving terminal 302 connected so as to be able to transmit and receive information to and from each other.

The server device 301 is, for example, composed of one or more information processing devices, and has a detection unit 301a and a determination unit 301b. The detection unit 301a is a functional unit corresponding to the above-mentioned detection unit 32 or detection unit 322, and for example, detects a plurality of watermark data from the received third audio data. The determination unit 301b is a functional unit corresponding to the above-mentioned determination unit 33 or determination unit 323, and for example, determines the validity of the third audio data with respect to the first audio data based on a plurality of watermark data (detected watermark dataset) having the second sequence detected from the third audio data. On the other hand, the receiving terminal 302 may not have the above-mentioned detection unit 322 or determination unit 323.

In the receiving system 3 according to this modified example, the server device 301 can execute the determination of the validity of the third audio data with respect to the first audio data. Therefore, the configuration of the receiving terminal 302 can be simplified, and for example, even for a general-purpose information processing device that does not have the detection unit 32 or 322 or the determination unit 33 or 323 and the like, it is possible to determine the validity of the third audio data with respect to the first audio data and notify the user of the general-purpose information processing device of the determination result.

### (2) Operation Sequence

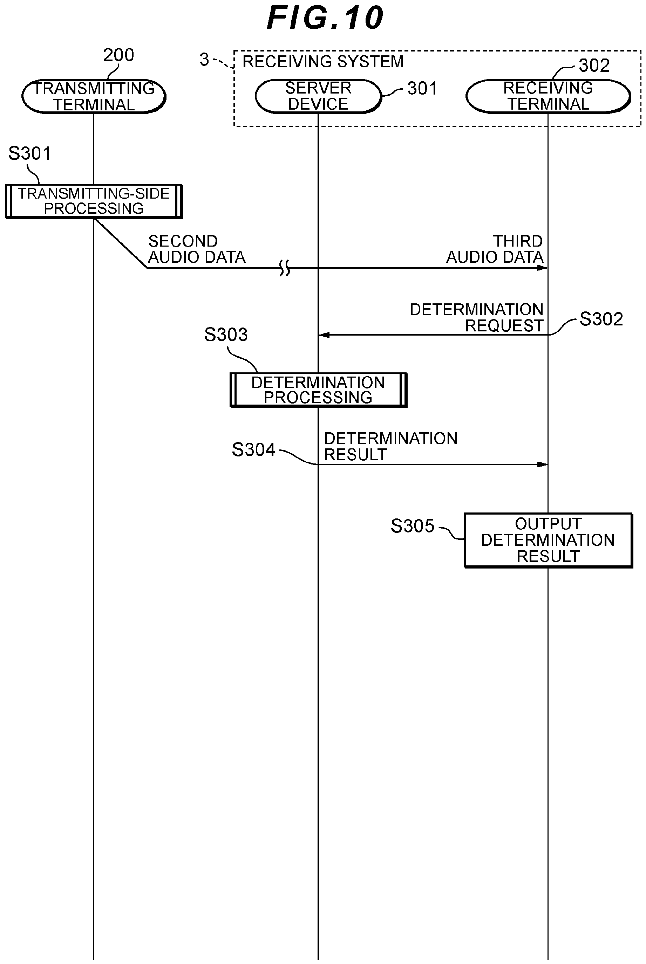

Fig. 10 is an operation sequence diagram showing an example of the operation processing of the determination system 101 according to this modified example.

### (S301)

First, the transmitting terminal 200 executes, for example, the operation processing shown in Fig. 7 as the transmitting-side processing. As a result, the transmitting terminal 200 transmits the second audio data generated by embedding the embedded watermark dataset in the first audio data to the receiving terminal 302 via the predetermined transmission medium M. As a result, the receiving terminal 302 receives the third audio data corresponding to the second audio data via the predetermined transmission medium M.

The transmitting terminal 200 may transmit the second audio data to the server device 301 via the predetermined transmission medium M. As a result, the server device 301 receives the third audio data corresponding to the second audio data via the predetermined transmission medium M. The server device 301 may also transmit the received third audio data to the receiving terminal 302.

### (S302)

The receiving terminal 302 then transmits a request (a determination request) to the server device 301 to determine the validity of the third audio data with respect to the first audio data. At this time, the receiving terminal 302 may transmit the third audio data to the server device 301.

### (S303)

When the server device 301 receives the determination request from the receiving terminal 302, the server device 301 executes the same operation processing as the operation processing shown in Fig. 8 as the determination processing. Specifically, the detection unit 301a of the server device 301 detects a plurality of watermark data having the second sequence from the third audio data, as in step S202. Then, the determination unit 301b of the server device 301 determines whether a predetermined determination execution condition is satisfied, as in steps S203 and S204, and if it is determined that the predetermined determination execution condition is satisfied, determines the validity of the third audio data with respect to the first audio data based on the plurality of watermark data (detected watermark dataset) having the second sequence detected from the third audio data.

### (S304)

Next, the server device 301 transmits the determination result on the validity from the determination unit 301b to the receiving terminal 302.

### (S305)

Next, the receiving terminal 302 controls the output device of the input/output I/F 404 to output the determination result received from the server device 301. Thereafter, the processing of the determination system 101 returns to step S301, and thereafter, the above-described steps S301 to S305 are repeated until a predetermined end condition is satisfied.

The present invention is not limited to the above-mentioned embodiment and can be embodied in various other forms without departing from the scope of the present invention. Therefore, the above-mentioned embodiment and modified examples are merely examples in every respect, and should not be interpreted as being restrictive. For example, the above-mentioned steps can be arbitrarily changed in order or executed in parallel as long as there is no inconsistency in the processing content. In addition, other steps may be added between each step. In addition, a step described as one step may be executed in multiple steps, and what is described as being divided into multiple steps can be understood as one step.

### Reference Signs List

- 1: Determination system
- 2: Transmitting system
- 21: Embedding unit
- 22: Transmitting unit
- 3: Receiving system
- 31: Receiving unit
- 32: Detection unit
- 33: Determination unit
- 100: Determination system
- 200: Transmitting terminal
- 210: Storage unit
- 211: Embedded watermark dataset information
- 212: Key information
- 213: User identification information
- 220: Control unit
- 221: Audio acquisition unit
- 222: Embedding unit
- 223: Transmitting unit
- 300: Receiving terminal
- 310: Storage unit
- 311: Embedded watermark dataset information
- 312: Key information
- 313: User identification information
- 320: Control unit
- 321: Receiving unit
- 322: Detection unit
- 323: Determination unit
- 324: Output control unit
- 400: Information processing device
- 401: Processor
- 402: Memory
- 403: Storage
- 404: Input/output I/F
- 405: Communication I/F
- 101: Determination system
- 301: Server device
- 302: Receiving terminal

## Claims

1. A system comprising:
an embedding unit that generates second audio data by embedding a plurality of watermark data in a first sequence in first audio data;
a transmitting unit that transmits the second audio data via a transmission medium;
a receiving unit that receives third audio data corresponding to the second audio data via a transmission medium;
a detection unit that detects a plurality of watermark data in a second sequence from the received third audio data; and
a determination unit that determines validity of the third audio data with respect to the first audio data, based on the plurality of watermark data having the second sequence detected from the third audio data.

2. The system according to claim 1, wherein
the determination unit determines the validity of the third audio data with respect to the first audio data, based on consistency between the plurality of watermark data having the first sequence embedded in the first audio data and the plurality of watermark data having the second sequence detected from the third audio data.

3. The system according to claim 2, wherein
the determination unit determines reproducibility of the first audio data in the third audio data, based on the consistency as the determination of validity.

4. The system according to claim 2 or 3, wherein
the embedding unit generates the second audio data by embedding the plurality of watermark data in the first sequence corresponding to user identification information, and
the determination unit determines identity of a user associated with the third audio data and a user associated with the first audio data, based on the consistency as the determination of validity.

5. The system according to claim 2 or 3, wherein
the embedding unit further generates the plurality of watermark data having the first sequence to be embedded in the first audio data by executing a predetermined operation based on a predetermined key consisting of a plurality of partial keys having a third sequence and user identification information, and
the determination unit determines, as the determination of validity, identity of a user associated with the third audio data and a user associated with the first audio data, based on whether the detected plurality of watermark data having the second sequence are generated by executing the predetermined operation based on the predetermined key and the user identification information.

6. An information processing device comprising:
a detection unit that detects a plurality of watermark data in a second sequence from third audio data received via a transmission medium, the third audio data corresponding to second audio data generated by embedding a plurality of watermark data in a first sequence in first audio data; and
a determination unit that determines validity of the third audio data with respect to the first audio data, based on the plurality of watermark data having the second sequence detected from the third audio data.

7. A method for causing an information processing device to execute the steps of:
detecting a plurality of watermark data in a second sequence from third audio data received via a transmission medium, the third audio data corresponding to second audio data generated by embedding a plurality of watermark data in a first sequence in first audio data; and
determining validity of the third audio data with respect to the first audio data, based on the plurality of watermark data having the second sequence detected from the third audio data.

8. A program for causing an information processing device to execute the steps of:
detecting a plurality of watermark data in a second sequence from third audio data received via a transmission medium, the third audio data corresponding to second audio data generated by embedding a plurality of watermark data in a first sequence in first audio data; and
determining validity of the third audio data with respect to the first audio data, based on the plurality of watermark data having the second sequence detected from the third audio data.

9. An information processing device comprising:
an embedding unit that generates second audio data by embedding a plurality of watermark data in a first sequence in first audio data; and
a transmitting unit that transmits the second audio data to another information processing device via a transmission medium, wherein
the other information processing device comprises:
a receiving unit that receives third audio data corresponding to the second audio data via a transmission medium;
a detection unit that detects a plurality of watermark data in a second sequence from the received third audio data; and
a determination unit that determines validity of the third audio data with respect to the first audio data, based on the plurality of watermark data having the second sequence detected from the third audio data.

10. A method for causing an information processing device to execute the steps of:
generating second audio data by embedding a plurality of watermark data in a first sequence in first audio data; and
transmitting the second audio data to another information processing device via a transmission medium, wherein
the other information processing device comprises:
a receiving unit that receives third audio data corresponding to the second audio data via a transmission medium;
a detection unit that detects a plurality of watermark data in a second sequence from the received third audio data; and
a determination unit that determines validity of the third audio data with respect to the first audio data, based on the plurality of watermark data having the second sequence detected from the third audio data.

11. A program for causing an information processing device to execute the steps of:
generating second audio data by embedding a plurality of watermark data in a first sequence in first audio data; and
transmitting the second audio data to another information processing device via a transmission medium, wherein
the other information processing device comprises:
a receiving unit that receives third audio data corresponding to the second audio data via a transmission medium;
a detection unit that detects a plurality of watermark data in a second sequence from the received third audio data; and
a determination unit that determines validity of the third audio data with respect to the first audio data, based on the plurality of watermark data having the second sequence detected from the third audio data.
